# EUROPEAN PATENT SPECIFICATION

(11) **EP 1 116 110 B1**
(45) Date of publication and mention of the grant of the patent: **23.04.2003**
(21) Application number: 99945803.7
(22) Date of filing: 24.09.1999
(51) Int. Cl.: G06F 9/46

(54) **METHOD OF CREATING AN INSEPARABLE LINK BETWEEN AN ELECTRONIC DOCUMENT AND OLE OBJECTS**
VERFAHREN ZUR HERSTELLUNG EINER UNLÖSBAREN VERKNÜPFUNG ZWISCHEN EINEM ELEKTRONISCHEN DOKUMENT UND OLE OBJEKTEN
PROCEDE DE CREATION D'UNE LIAISON INSEPARABLE ENTRE UN DOCUMENT ELECTRONIQUE ET DES OBJETS OLE

(30) Priority: 25.09.1998 CA 2246095
(43) Date of publication of application: 18.07.2001
(73) Proprietor: Silanis Technology Inc., St-Laurent, Quebec H4R 2N1 (CA)
(72) Inventor: PETROGIANNIS, Tommy, Montreal, Quebec H4B 2L4 (CA); SILVESTER, Joseph, Dollard des Ormeaux, Quebec H9G 1W1 (CA)
(74) Representative: Mayjonade, Bernard
(86) International application number: CA9900889
(87) International publication number: WO00019315

(56) References cited:
- US-A- 5 606 609
- US-A- 5 680 452
- WILLIAMS S ET AL: "THE COMPONENT OBJECT MODEL. THE FOUNDATION FOR OLE SERVICES" DR. DOBB'S SPECIAL REPORT,XX,XX, vol. 19, no. 16, 21 December 1994 (1994-12-21), pages 14-22, XP002025907

## Description

### FIELD OF THE INVENTION

The present invention relates to the field of electronic documents, and more particularly concerns a method for a secure insertion and linking of objects in electronic documents such that OLE objects cannot be deleted from these documents without detection.

### BACKGROUND OF THE INVENTION

There are many computer systems that have been designed to create, store, approve, revise or verify data electronically. In this age of sophisticated communications technology, having access to such systems can have a great impact on the way transactions are carried out and information and documents can be exchanged. Moreover, the use of such systems contributes to reducing the costs associated with the use of paper, namely, though not exclusively, in the area of processing data or documents. Considerable time can be saved through the use of electronic submission processes, in which paper-based documentation is replaced by electronic data submissions.

OLE technology or Object Linking and Embedding or Active X technology (or more recently COM objects) allows users to insert OLE Objects into electronic documents. For example, a business plan might contain text, charts and financial projections. The business plan itself might be created using a word processor. However, the charts and financial projections could be created using a spreadsheet application. The charts and spreadsheets can then be inserted into the business plan document. Now, the completed business plan document contains 2 types of objects: the word processing document and, embedded within the word processing document, the charts and financial projections from the spreadsheet Any application that supports OLE technology will allow this type of data insertion.

The benefits of these compound electronic documents is the fact that although the user works on a single document, the contents of the document may be generated using two or more separate applications. The user does not have to concern himself with the actual applications which create these objects but only the final documents that may contain these objects from various applications.

Since these objects are inserted into a document, there are no inherent security features built into the document For example, in the previously mentioned business plan, the charts or financial data or other objects could be easily deleted by the user and nothing will prevent this from occurring. The reason this occurs is due to the inherent architecture of the systems, since all the code that handles the OLE object is in another application; if that application is not running or not available, then nothing can be done to prevent the deletion of the OLE object

Of interest in the art is U.S. patent no. 5,606,609 to HOUSER et al., which describes an electronic document verification system and method. HOUSER et al. teaches the verification of the integrity or signator of an electronic document by embedding a security object, for example, supported by an object linking embedding (OLE) capability, in the electronic document at a location selected by the signator. The embedded object includes security information, as well as an identifier for triggering the processing of the security information. In the patent, it is taught that the security information includes a document digest which is representative of the electronic document at the time the security object was embedded, a signature digest, and the signature electronic chop. The chop can be the digitized signature or other graphic image. When the electronic document is later displayed, the identifier triggers processing which decrypts the security information and calculates the document digest based on the current state of the electronic document. The signator of the document can be verified based on the results of the decryption and the integrity of the document can be verified by comparing the decrypted document digest and the original document digest. If both signator and integrity are verified, the electronic chop is displayed; otherwise, the chop is not displayed and a message is displayed alerting the user to such fact.

### SUMMARY OF THE INVENTION

It is an object of the present invention to provide a method for creating an inseparable link between an electronic host document and OLE objects. In accordance with the invention, this object is achieved with a method comprising the steps of:
(a) making the electronic document available to a user:
(b) for each insertion of an OLE object into the electronic document, performing the sub-steps of:
   (i) creating security information in the form of deletion protection data relating to the OLE object to be inserted into the electronic document;
   (ii) associating the security information with the electronic document thereby linking said OLE object with said electronic document; and
   (iii) inserting the OLE object into the electronic document
(c) for subsequent insertion of OLE objects in the electronic document, verifying if the electronic document contains security information; if not, proceeding with step (b) for all OLE objects to be inserted; if the document contains security information, verifying the presence of the OLE objects related to the security information; if the OLE object is present, proceeding with step (b) for OLE objects to be inserted; if the OLE object is not present, alerting the user that the OLE object has been deleted without authorization or taking corrective action.

### BRIEF DESCRIPTION OF THE DRAWINGS

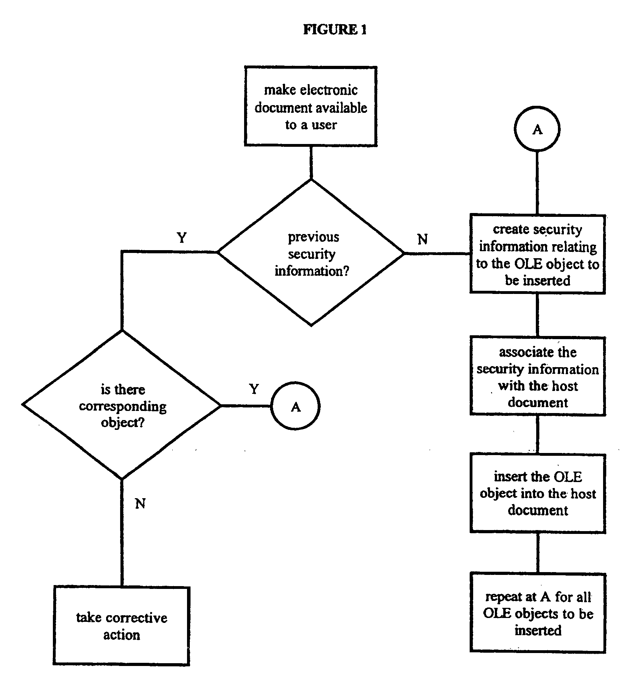

The present invention and its advantages will be better understood upon reading the following non-restrictive description of embodiments thereof with reference to the accompanying drawing in which FIG. 1 is a schematic flow chart representing the main steps of a method for creating an inseparable link between an electronic document and OLE objects according to a preferred embodiment of the present invention.

### DESCRIPTION OF A PREFERRED EMBODIMENT OF THE INVENTION

The present invention is a method for creating an inseparable link between an electronic document (hereinafter referred to as "host document") and other objects, called Object Linking and Embedding (OLE) objects, that are inserted into that document. The present invention is concerned with the detection and prevention of unauthorized deletions of OLE objects from electronic documents. In this way, objects or files (e.g. OLE objects) that have been added to existing documents can be traced. Users can therefore confirm that particular objects were added to a document and/or that they were not removed without authorization.

Generally, upon the insertion of an OLE object into the host document, security information relating to the OLE object is created. Preferably, this security information is a unique ID. This ID can be a randomly generated alphanumeric string, and can include other data such as user name, system name or application serial number, etc. However, it should be understood that the present invention is not limited to a particular form of security information. Once the security information is created, it is preferably embedded into the host document or, alternatively, stored in a linked storage system. As mentioned previously, other information can also form part of the security information, such as the raw data contained in the OLE object. This would be done so that the OLE object could subsequently be rebuilt if it were deleted.

Prior to inserting the OLE object into the host document, the host document is examined for previous OLE security information, i.e. to verify if OLE objects were previously inserted.

If the security information relating to an OLE object is found within the host document, the host document is verified for the presence of the associated OLE object. If the corresponding OLE object is not found in the host document, the method according to the invention indicates that a particular OLE object has been removed without authorization. If the raw OLE data was also initially embedded within the security information, the OLE object could be rebuilt using the OLE data. In order to do this, the security information is verified for the presence of OLE data. If there is OLE data, an analysis of the data is performed in order to determine its usefulness. If it is determined that the data will permit rebuilding or recreating the deleted OLE object, the OLE object is so rebuilt or recreated. If the data is information that is to be displayed to the user, then the data is displayed to the user. If the data indicates that corrective action be taken, then the method according to the present invention will recognize the corrective action to be taken.

If the security information does not include OLE data, then corrective action would be necessary in order to restore the deleted object, such as by alerting the user that an OLE object is missing, and that the accuracy of the document cannot be guaranteed.

The step of creating security information about the OLE object and associating it with the host document, either by embedding the information within the host document but outside the OLE object, or by storing the security information in a linked storage system, insures that, unless the person deleting the OLE object that has been inserted into-the host document following the method of the invention is able to gain access and delete the security information itself, the method according to the invention will always detect if an OLE object existed in the document previously.

Referring now to Fig. 1, the method for creating an inseparable link between an electronic document and OLE objects according to the present invention comprises the following steps.

The host document is made available to a user at step 1. The user then indicates that an OLE object should be inserted at a given location. The host document is then advantageously examined at step 2 to determine if previous OLE security information is present at step 2. It should be understood that this step of verifying previous OLE security information at this point is essentially to determine if an OLE object other than the one the user wants to insert has been improperly deleted.

If the document does not contain any previous security information, security information related to the OLE object that is to be inserted is created at step 3. This security information is then associated with the host document at step 4, either by embedding the security information in the host document or by storing the security information in a linked storage system. Finally, the OLE object is inserted into the electronic document at step 5. As indicated at step 6, if there are any other OLE objects to be inserted, steps 3 to 5 are repeated for each OLE object.

However, if security information relating to a previously inserted OLE object is present, then the host document is examined for the presence of the OLE object associated with that security information at step 7. If no corresponding object is found, then corrective action as mentioned above is taken at step 9. If the corresponding OLE object is found, then steps 3 to 5 are performed, i.e. a new security information is created related to the OLE object to be inserted (step 3), this new security information is associated with the host document (step 4), and the OLE object is inserted into the host document (step 5).

It should however be understood that the present invention is more specifically directed to the creation of an inseparable link between a host document and an OLE object. It is not essential for the invention that the verification of the document for previous security information be performed when a user wishes to insert an OLE document. Such verification can be performed when the user opens the document, or when the user wishes to insert an OLE document, or at both times.

Along with insertion of an OLE object into a host document, removal of OLE objects must also be handled in a specific manner. According to a preferred embodiment of the invention, the OLE object or the application that inserted the OLE object should remove the object and then remove the security information related to the OLE object from the host document or the linked storage system, so that the host document is free from inaccurate references to previous OLE objects. This should however be permitted only to authorized users, since removal of the security information does not indicate to another person if an OLE object was previously inserted into the host document.

Multiple OLE objects can be handled by the method according to the present invention. When inserting multiple OLE objects, each object must have a corresponding security entry. If the number of existing objects does not match the number of security entries, then appropriate corrective actions need to be taken since it indicates that at least one OLE object has been deleted from the host document.

An example of where the present invention finds a particular application is in the area of electronic document approval. Many systems have been developed to allow users to sign documents electronically with an electronically captured handwritten signature, or by other means. The electronic approval application (and here we refer to the method or software which handles the electronic approval), which generates the approval and the signatures, can be an OLE object. When the user approves the document, an approval object is placed into the document so that the signature can be displayed. Each approval will embed this approval object into the document.

The problem occurs if someone decides to delete one or all of the signatures without permission. The present invention will prevent removal or at least alert the users of removal of signature objects. Each time an approval is performed, security information about the OLE object is placed into the document or into a linked storage system. Now, if a signature is removed, the method according to the present invention can detect the illegal removal of the particular OLE object and warn the user accordingly. Alternatively, if along with the security information other data is also present, the signature object could be rebuilt and displayed.

It should be also understood that the present invention is particularly adapted for embodiment within a computer program, either as a stand-alone application or integrated within any other application, which will perform all of the steps of the present invention.

## Claims

1. A method for linking an electronic document and OLE objects, comprising the steps of:
(a) making the electronic document available to a user;
(b) for each insertion of an OLE object into the electronic document, performing the sub-steps of:
(i) creating security information in the form of deletion protection data relating to the OLE object to be inserted into the electronic document;
(ii) associating the security information with the electronic document thereby linking said OLE object with said electronic document; and
(iii) inserting the OLE object into the electronic document;
(c) for subsequent insertion of OLE objects in the electronic document, verifying if the electronic document contains security information; if not, proceeding with step (b) for all OLE objects to be inserted; if the document contains securify information, verifying the presence of the OLE objects related to the security information; if the OLE object is present, proceeding with step (b) for OLE objects to be inserted; if the OLE object is not present, alerting the user that the OLE object has been deleted without authorization or taking corrective action.

2. A method according to claim 1, wherein said step of associating the security information with the host document in sub-step (b)(ii) includes embedding said security information into said electronic document

3. A method according to claim 1, wherein said security information includes an alphanumeric ID.

4. A method according to claim 3, wherein said security information further includes raw data associated with the inserted OLE object.

5. A method according to claim 1, wherein said step of associating said security information with said electronic document includes storing said security information in a linked storage system.

6. A method according to claim 1, wherein said sub-step (b)(ii) further includes the step of encrypting said security information prior to associating the security information with the electronic document.

7. A method according to claim 1, wherein said method further comprises the steps of:
(i) deleting the inserted OLE object; and
(ii) disassociating said security information from said electronic document.

8. A method according to claim 7, wherein said step of disassociating said security information includes the step of deleting said security information from said electronic document

## Patentansprüche

1. Verfahren zum Verknüpfen eines elektronischen Dokumentes mit OLE-Objekten, mit folgenden Schritten:
(a) Bereitstellen des elektronischen Dokumentes für einen Nutzer;
(b) Ausführen folgender Unterschritte bei jeder Einfügung eines OLE-Objektes in das elektronische Dokument:
(i) Erzeugen von Sicherheitsinformation in Form von Löschschutz-Daten bezüglich des in das elektronische Dokument einzufügenden OLE-Objektes;
(ii) Verbinden der Sicherheitsinformation mit dem elektronischen Dokument, wobei das OLE-Objekt dadurch mit dem elektronischen Dokument verknüpft wird; und
(iii) Einfügen des OLE-Objektes in das elektronische Dokument;
(c) Verifizieren, bei nachfolgender Einfügung von OLE-Objekten in das elektronische Dokument, ob das elektronische Dokument Sicherheitsinformation enthält; falls nicht, Fortfahren mit Schritt (b) für alle einzufügenden OLE-Objekte; falls das Dokument Sicherheitsinformation enthält, Verifizieren der Anwesenheit der OLE-Objekte, die zu der Sicherheitsinformation gehören; falls das OLE-Objekt anwesend ist, Fortfahren mit Schritt (b) für einzufügende OLE-Objekte; wenn das OLE-Objekt nicht anwesend ist, Alarmieren des Nutzers, daß das OLE-Objekt ohne Erlaubnis gelöscht worden ist, oder Vornehmen einer Korrekturmaßnahme.

2. Verfahren nach Anspruch 1, wobei der Schritt des Verbindens der Sicherheitsinformation mit dem Wirtsdokument im Unterschritt (b) (ii) die Einbettung der Sicherheitsinformation in das elektronische Dokument einschließt.

3. Verfahren nach Anspruch 1, wobei die Sicherheitsinformation eine alphanumerische ID-Kennung aufweist.

4. Verfahren nach Anspruch 3, wobei die Sicherheitsinformation darüber hinaus mit dem eingefügten OLE-Objekt verbundene Ausgangsdaten enthält.

5. Verfahren nach Anspruch 1, wobei der Schritt des Verbindens der Sicherheitsinformation mit dem elektronischen Dokument das Speichern der Sicherheitsinformation in einem verknüpften Speichersystem einschließt.

6. Verfahren nach Anspruch 1, wobei der Unterschritt (b) (ii) ferner den Schritt des Verschlüsselns der Sicherheitsinformation vor dem Verbinden der Sicherheitsinformation mit dem elektronischen Dokument einschließt.

7. Verfahren nach Anspruch 1, wobei das Verfahren ferner die Schritte aufweist:
(i) Löschen des eingefügten OLE-Objektes; und
(ii) Trennen der Sicherheitsinformation von dem elektronischen Dokument.

8. Verfahren nach Anspruch 7, wobei der Schritt des Trennens der Sicherheitsinformation den Schritt des Löschens der Sicherheitsinformation in dem elektronischen Dokument beinhaltet.

## Revendications

1. Procédé permettant de lier un document électronique et des objets OLE, comprenant les opérations suivantes :
(a) rendre le document électronique disponible à un utilisateur ;
(b) pour chaque insertion d'un objet (OLE) dans le document électronique, effectuer les sous-opérations suivantes :
(i) créer une information de sécurité sous la forme d'une donnée de protection contre l'effacement qui se rapporte à l'objet OLE à insérer dans le document électronique ;
(ii) associer l'information de sécurité au document électronique de manière à lier ledit objet OLE avec ledit document électronique ; et
(iii) insérer l'objet OLE dans le document électronique ;
(c) pour l'insertion ultérieure d'objets OLE dans le document électronique, vérifier si le document électronique contient une information de sécurité ; si ce n'est pas le cas, effectuer l'opération (b) pour tous les objets OLE à insérer ; si le document contient une information de sécurité, vérifier la présence des objets OLE reliés à l'information de sécurité ; si l'objet OLE est présent, effectuer l'opération (b) pour les objets OLE à insérer ; si l'objet OLE n'est pas présent, avertir l'utilisateur que l'objet OLE a été effacé sans autorisation ou entreprendre une action de correction.

2. Procédé selon la revendication 1, où ladite opération d'association de l'information de sécurité avec le document hôte de la sous-opération (b) (ii) comporte l'imbrication de ladite information de sécurité dans ledit document électronique.

3. Procédé selon la revendication 1, où ladite information de sécurité comporte un identificateur, noté ID, alphanumérique.

4. Procédé selon la revendication 3, où ladite information de sécurité comporte en outre des données brutes associées à l'objet OLE inséré.

5. Procédé selon la revendication 1, où l'opération d'association de ladite information de sécurité avec ledit document électronique comporte l'enregistrement de ladite information de sécurité dans un système d'enregistrement lié.

6. Procédé selon la revendication 1, où ladite sous-opération (b) (ii) comporte en outre l'opération consistant à crypter ladite information de sécurité avant d'associer l'information de sécurité avec le document électronique.

7. Procédé selon la revendication 1, où ledit procédé comprend en outre les opérations suivantes :
(i) effacer l'objet OLE inséré ; et
(ii) désassocier dudit document électronique ladite information de sécurité.

8. Procédé selon la revendication 7, où ladite opération de dissociation de ladite information de sécurité comporte l'opération consistant à effacer dudit document électronique ladite information de sécurité.
